(19) Europäisches Patentamt / European Patent Office / Office européen des brevets

(11) **EP 4 007 158 B1**

(12) **EUROPEAN PATENT SPECIFICATION**

(45) Date of publication and mention
of the grant of the patent:
**24.12.2025 Bulletin 2025/52**

(21) Application number: **20858002.7**

(22) Date of filing: **13.08.2020**

(51) International Patent Classification (IPC):
$H02P\ 21/18^{(2016.01)}$    $H02P\ 21/00^{(2016.01)}$
$H02P\ 21/22^{(2016.01)}$    $H02P\ 27/12^{(2006.01)}$

(52) Cooperative Patent Classification (CPC):
**H02P 27/12; H02P 21/0025; H02P 21/18;
H02P 21/22**

(86) International application number:
**PCT/CN2020/108812**

(87) International publication number:
**WO 2021/036794 (04.03.2021 Gazette 2021/09)**

(54) **CONTROL METHOD AND CONTROLLER**

STEUERUNGSVERFAHREN UND STEUERUNG

PROCÉDÉ DE COMMANDE ET DISPOSITIF DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2019 CN 201910818960**

(43) Date of publication of application:
**01.06.2022 Bulletin 2022/22**

(73) Proprietor: **Great Wall Motor Company Limited
Baoding, Hebei 071000 (CN)**

(72) Inventors:
• **WANG, Qiannan
Baoding, Hebei 071000 (CN)**
• **JANA, Arup
Baoding, Hebei 071000 (CN)**

(74) Representative: **Klunker IP
Patentanwälte PartG mbB
Destouchesstraße 68
80796 München (DE)**

(56) References cited:
CN-A- 102 593 841    CN-A- 106 788 072
CN-A- 107 919 828    CN-A- 107 919 828
CN-B- 102 593 841    JP-A- 2002 238 278
US-A1- 2006 022 628    US-A1- 2016 294 314

• PEI XUEJUN ET AL: "Analysis and calculation of
DC-link current and voltage ripple for three-
phase inverter with unbalanced loads", 2014
IEEE APPLIED POWER ELECTRONICS
CONFERENCE AND EXPOSITION - APEC 2014,
IEEE, 16 March 2014 (2014-03-16), pages 1565 -
1572, XP032590893, DOI: 10.1109/
APEC.2014.6803515

**Description**

TECHNICAL FIELD

The present application relates to the technical field of motor, and in particular to a control method and a controller.

BACKGROUND

In recent years, clean energy vehicles have attracted more and more attention. The power of pure electric vehicles mainly comes from motors, while permanent magnet synchronous motors are widely used due to their high power-density and high efficiency. For the permanent magnet synchronous motor drives controller, it needs the bus current to monitor the status of the current controller, so the bus current of the current controller needs to be obtained.

Using software to estimate the bus current can save costs and improve system reliability. The current method for estimating the bus current by software is: in one switching period T, using the adjustment coefficient $\lambda$ to adjust the action time ta, tb, tc of the three-phase current ia, ib, ic in the bus, to obtain ta1=$\lambda$ta( (k-1)T)+(1-$\lambda$)ta(kT); tb1=$\lambda$tb((k-1)T)+(1-$\lambda$) tb(kT); tc1=$\lambda$tc((k-1)T )+(1-$\lambda$)tc(kT), and then the estimated bus current is: the ratio of (ta1*ia+tb1*ib+tc1*ic) to the period T. Because ta1/T, tb1/T, and tc1/T are the PWM (pulse width modulation) duty cycles of the three-way bridge arms, respectively, this method compensates the PWM duty cycle. According to this method, the maximum compensation value can only be one cycle before or after. For some working conditions, this method is easy to be limited and not flexible enough, so that engineers cannot grasp the bus current value at any time, which makes it more difficult to control the motor.

CN 107 919 828 A discloses a control device and method for a permanent magnet synchronous motor that optimizes efficiency by converting real-time three-phase currents to q-axis and d-axis two-phase currents using CLARK and PARK transformations, calculating an electric angle offset ($\Delta\theta$) based on these currents, the motor's real-time speed, and the relationship between electric angle offset and efficiency, and then converting the resulting two-phase reference voltages back into three-phase control voltages using PARK inverse transformation, SVPWM, and IGBT inverter modules, with adjustments made via PI controllers to ensure the motor operates at maximum efficiency. In particular, it provides a detailed explanation of the relationship between the efficiency ($\eta$) of an electric motor and its torque (T), angular speed ($\omega$), and the supply voltage (U) and current (I) and presents an experimental table showing the required electric angle offsets for different speeds and current values, wherein the experimental data may vary depending on the specific motor model and a recalibration might be necessary when using different types of motors.

CN 102 593 841 B discloses a current separation compensation-based cascaded H-bridge distribution static synchronous compensator (DSTATCOM) device which comprises cascade structures of three phases of power units

"Analysis and calculation of DC-link current and voltage ripple for three-phase inverter with unbalanced loads" from Peix Xuejun et al discloses the analysis and calculation of the dc-link current and voltage ripple for three-phase inverter with unbalanced load.

SUMMARY

The present application provides a control method to solve the problem that the existing bus current estimation control method is easily restricted by working conditions, resulting in increased difficulty in controlling the motor.

In order to achieve the above object, the technical solution of the present application is achieved according to a method and a device in the independent claims. Further embodiments are specified in the dependent claims. This is realised in this way:

a control method, applied in a controller of a permanent magnet synchronous motor, and the method includes:

> collecting a rotor position, a motor speed, a quadrature-axis current, a direct-axis current and pulse width modulation duty cycles of three-way bridge arms of the permanent magnet synchronous motor;
> compensating the rotor position by using the motor speed, to obtain a real-time rotor position;
> transforming the quadrature-axis current and the direct-axis current into a real-time three-phase current according to the real-time rotor position;
> according to the real-time three-phase current and the pulse width modulation duty cycles of the three-way bridge arms, determining a bus current estimated value;
> low-pass filtering the bus current estimated value, to obtain a target bus current value; and
> controlling the permanent magnet synchronous motor according to the target bus current value.

Further, the rotor position is a rotor rotation angle, and compensating the rotor position by using the motor speed, to obtain a real-time rotor position, comprises:

querying a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value; and

according to the rotor-rotation-angle compensation value, compensating the rotor position, to obtain the real-time rotor position.

Further, the preset rotor-position-information compensation table is obtained by the following steps:

selecting a plurality of test motor speeds in the speed range of the permanent magnet synchronous motor;
for each of the plurality of test motor speeds, determining a bus current actual value and a bus current test value corresponding to the test motor speed;
determining a corresponding rotor-rotation-angle compensation value according to the bus current actual value and the bus current test value corresponding to the test motor speed; and
adding the rotor-rotation-angle compensation value and the test motor speed into the rotor-position-information compensation table according to the corresponding relation.

Further, determining a corresponding rotor-rotation-angle compensation value according to the bus current actual value and the bus current test value corresponding to the test motor speed comprises:

calculating a difference value between the bus current actual value and the bus current test value corresponding to each of the plurality of test motor speeds; and
determining the rotor-rotation-angle compensation value corresponding to each of the plurality of test motor speeds according to the difference value.

Further, transforming the quadrature-axis current and the direct-axis current into a real-time three-phase current according to the real-time rotor position comprises:

transforming the quadrature-axis current and the direct-axis current into a two-phase current that is stationary relative to a stator according to the real-time rotor position; and
transforming the two-phase current that is stationary relative to the stator into the real-time three-phase current.

Further, according to the real-time three-phase current and the pulse width modulation duty cycles of the three-way bridge arms, determining a bus current estimated value, comprises:

for each bridge arm, calculating a product of a current corresponding to the bridge arm from the real-time three-phase current and the pulse width modulation duty cycle corresponding to the bridge arm; and
calculating a sum of the products corresponding to the three-way bridge arms, to obtain the bus current estimated value.

Compared with the prior art, the control method of the present application has the following advantages:
In the control method of the present application, by collecting the rotor position, motor speed, quadrature-axis current, direct-axis current and the pulse width modulation duty cycles of the three-way bridge arms of the permanent magnet synchronous motor, compensating the rotor position according to the motor speed, and then calculating a three-phase current according to the compensated rotor position information, finally, determining a bus current estimated value by using the three-phase current and the PWM value as a calculation input of the bus current, after low-pass filtering the bus current, to obtain a target bus current value, therefore, controlling the permanent magnet synchronous motor according to the target bus current value. The above method can compensate the three-phase current at any position, in all working conditions, no matter whether the motor speed is high or low, there is a high estimation accuracy, which allows engineers to grasp the bus current at any time, and then realize the precise control of the permanent magnet synchronous motor.
Another object of the present application is to provide a controller, to solve the problem that the existing bus current estimation control method is easily restricted by working conditions, resulting in increased difficulty in controlling the motor.
In order to achieve the above object, the technical solution of the present application is achieved in this way:
a controller, including:

a collection module, configured to collect a rotor position, a motor speed, a quadrature-axis current, a direct-axis current and pulse width modulation duty cycles of three-way bridge arms of the permanent magnet synchronous motor;

a real-time rotor position acquisition module, configured to compensate the rotor position by using the motor speed, to obtain a real-time rotor position;

a real-time three-phase current transformation module, configured to transform the quadrature-axis current and the direct-axis current into a real-time three-phase current according to the real-time rotor position;

a bus current estimating module configured to, according to the real-time three-phase current and the pulse width modulation duty cycles of the three-way bridge arms, determine a bus current estimated value;

a low-pass filter module, configured to low-pass filter the bus current estimated value, to obtain a target bus current value; and

a control module, configured to control the permanent magnet synchronous motor according to the target bus current value.

Further, the rotor position is a rotor rotation angle, and the real-time rotor position acquisition module comprises:

a querying submodule, configured to query a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value; and

a compensating submodule configured to, according to the rotor-rotation-angle compensation value, compensate the rotor position, to obtain the real-time rotor position.

Further, the controller further comprises:

a speed selection module, configured to select a plurality of test motor speeds in the speed range of the permanent magnet synchronous motor;

a bus current determination module configured to, for each of the plurality of test motor speeds, determining a bus current actual value and a bus current test value corresponding to the test motor speed;

a compensation value determination module, configured to determine a corresponding rotor-rotation-angle compensation value according to the bus current actual value and the bus current test value corresponding to the test motor speed; and

an adding module, configured to add the rotor-rotation-angle compensation value and the test motor speed into the rotor-position-information compensation table according to the corresponding relation.

Further, the compensation value determination module comprises:

a difference value calculation submodule, configured to calculate a difference value between the bus current actual value and the bus current test value corresponding to each of the plurality of test motor speeds; and

a compensation value determination submodule, configured to determine the rotor-rotation-angle compensation value corresponding to each of the plurality of test motor speeds according to the difference value.

Further, the real-time three-phase current transformation module comprises:

a first transformation submodule, configured to transform the quadrature-axis current and the direct-axis current into a two-phase current that is stationary relative to a stator according to the real-time rotor position; and

a second transformation submodule, configured to transform the two-phase current that is stationary relative to the stator into the real-time three-phase current.

Further, the bus current estimating module comprises:

a product calculation submodule configured to, for each bridge arm, calculate a product of a current corresponding to the bridge arm from the real-time three-phase current and the pulse width modulation duty cycle corresponding to the bridge arm; and

a bus current estimating submodule, configured to calculate a sum of the products corresponding to the three-way bridge arms, to obtain the bus current estimated value.

The controller and the above-mentioned control method have the same advantages over the prior art, which will not be repeated here.

The above description is only an overview of the technical solutions of the present application. To make the technical means of the present application clearer and can be implemented according to the contents of the specification, and to make the above and other purposes, features and advantages of the present application more obvious and easier to understand, specific implementations of the present application will be illustrated by way of examples.

BRIEF DESCRIPTION OF THE DRAWINGS

The accompanying drawings constituting a part of the present application are used to provide further understanding of the present application, and the exemplary embodiments of the present application and their descriptions are used to explain the present application and do not constitute an improper limitation of the present application. In the drawings:

FIG. 1 illustrates a first flow chart of a control method according to an embodiment of the present application;
FIG. 2 illustrates a second flow chart of a control method according to an embodiment of the present application;
FIG. 3 illustrates a schematic diagram of a three-phase full-bridge inverter circuit according to an embodiment of the present application;
FIG. 4 illustrates a schematic diagram of a voltage space vector relationship according to an embodiment of the present application;
FIG. 5 illustrates a first structural block diagram of a controller according to an embodiment of the present application;
FIG. 6 illustrates a second structural block diagram of a controller according to an embodiment of the present application;
FIG. 7 schematically illustrates a block diagram of a computing and processing device for performing the method according to the present application; and
FIG. 8 schematically illustrates a storage unit for holding or carrying a program code for implementing the method according to the present application.

DETAILED DESCRIPTION

To make the objectives, technical solutions, and advantages of the present application clearer, the following clearly and completely describes the technical solutions in the embodiments of the present application with reference to the accompanying drawings in the embodiments of the present application. Obviously, the described embodiments are some but not all of embodiments of the present application. According to the embodiments of the present application, all other embodiments obtained by those of ordinary skill in the art without creative work should fall within the protection scope of the present application.

The present application will be described in detail below with reference to the accompanying drawings and in conjunction with the embodiments.

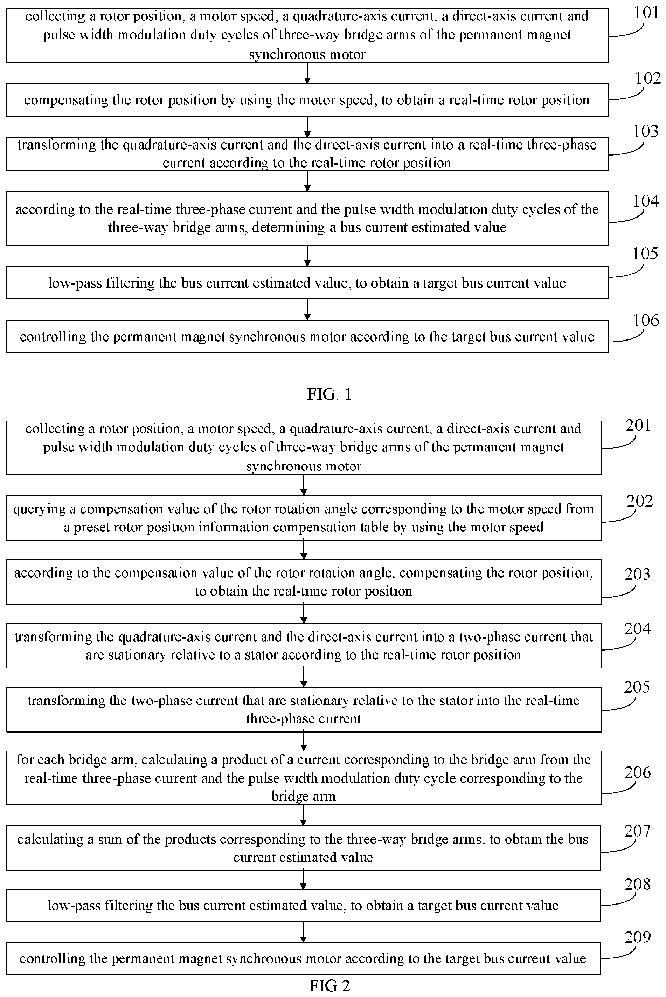

FIG. 1 illustrates a first flow chart of a control method according to an embodiment of the present application, and the method may include:

step 101, collecting a rotor position, a motor speed, a quadrature-axis current, a direct-axis current and pulse width modulation duty cycles of three-way bridge arms of the permanent magnet synchronous motor.

In the embodiment of the present application, the permanent magnet synchronous motor is a synchronous motor that is excited by a permanent magnet to generate a synchronous rotating magnetic field, the permanent magnet acts as a rotor to generate a rotating magnetic field, and the three-phase stator winding senses a three-phase symmetrical current through the armature reaction under the action of the rotating magnetic field. At this time, the kinetic energy of the rotor is converted into electrical energy, and the permanent magnet synchronous motor is used as a generator; in addition, when the three-phase symmetrical current is connected to the stator side, because the three-phase stator differs by 120 degrees in space position, the three-phase stator current generates the rotating magnetic field in the space, the rotor moves under the action of electromagnetic force in the rotating magnetic field. At this time, the electrical energy is converted into the kinetic energy, and the permanent magnet synchronous motor is used as a motor.

The control law of DC motor torque is simulated on a common three-phase AC motor, by a vector transformation of magnetic field orientation coordinates, the stator current of the three-phase AC motor is decomposed into an excitation current component and a torque current component, and it makes these two components mutually vertical and independent of each other, that is, the quadrature-axis current and the direct-axis current. The quadrature axis is also called the q axis, and the direct axis is also called the d axis, they are actually coordinate axes, not actual axes. In the control of the permanent magnet synchronous motor, in order to obtain control characteristics similar to DC motors, a coordinate system is established on the rotor of the motor, and the coordinate system rotates synchronously with the rotor. Take the direction of the rotor magnetic field as the d axis and the direction perpendicular to the direction of the rotor magnetic field as the q axis. The quadrature-axis current and direct-axis current can be directly read by the measuring tool during the operation of the motor.

In addition, the rotor position, motor speed information, and the pulse width modulation duty cycle of the current motor may also be read. The rotor position information may be obtained via the resolver coaxial with the rotor; the motor speed information may be obtained via the Hall switch detection method, that is, a magnet is fixed in the rotating part of the motor, and a Hall switch is arranged on the outer edge of the circumference of the magnet movement track, when the motor rotates, the Hall switch periodically induces the magnetic field lines to generate a pulse voltage, and the motor speed can be converted by counting the pulses within a certain period of time. The pulse width modulation duty cycle, where the pulse width is the time of a high level outputted in one cycle, and the pulse width modulation duty cycle is the proportion of the entire cycle of a high level in a pulse cycle. The pulse width modulation duty cycles of the three-way bridge arms may be obtained by calculating the ratio of the high-level action time collected by the detector to the current period.

Step 102, compensating the rotor position by using the motor speed, to obtain a real-time rotor position.

In the embodiment of the present application, there is a certain delay of the time from the position sensor detects the rotor position information to the acquisition and reading, in other words, the read rotor position information is not the real position of the rotor at this moment. And because the motor speed is converted by counting the pulse voltage, there is no delay, so according to the corresponding relation between the motor speed and the rotor position, the rotor position may be compensated to obtain the real-time rotor position information.

Step 103, transforming the quadrature-axis current and the direct-axis current into a real-time three-phase current according to the real-time rotor position.

In the embodiment of the present application, since the stator current of the three-phase AC motor is decomposed into the excitation current component and the torque current component, and these two components are perpendicular to each other and independent of each other, the quadrature-axis current and the direct-axis current are obtained. Then, in the contrary method, the quadrature-axis current and direct-axis current may be converted to the real-time three-phase current according to the real-time rotor position. Since the real-time rotor position is obtained by compensating according to the motor speed, the real-time three-phase current is obtained by conversion according to the real-time rotor position, which also indirectly realizes the compensation for the three-phase current. The essence of this compensation is that there is a delay in the actual motor control, which causes that the pulse width modulation signal sent out may only be reflected in the three-phase current signal after a certain period of time, so it is necessary to perform phase compensation on the three-phase current signal. This compensation method has nothing to do with the current cycle, and may compensate at any position of the three-phase current. In the full working conditions, no matter whether the motor speed is high or low, compensation may be performed.

Step 104, according to the real-time three-phase current and the pulse width modulation duty cycles of the three-way bridge arms, determining a bus current estimated value.

In the embodiment of the present application, for a permanent magnet synchronous motor controller that adopts vector control, three PWM waves control the switching operations of the three bridge walls, the sum of the products of the pulse width modulation duty cycle apportioned in each bridge wall and the three-phase current is the current bus current size. Therefore, according to the real-time three-phase current and the pulse width modulation duty cycles of the three-way bridge arms obtained in the preceding steps, the bus current estimated value can be determined.

Step 105, low-pass filtering the bus current estimated value, to obtain a target bus current value.

In the embodiment of the present application, the low-pass filter is a signal filtering method, and the rule is that low-frequency signals can pass normally, while high-frequency signals exceeding a set threshold are blocked and weakened. However, the magnitude of the blocking and the weakening will vary according to different frequencies and different filtering purposes. Since the estimated bus current value has many high-frequency points, from the waveform, there are many burrs, while the normal bus current is relatively stable and smooth, so after low-pass filtering the estimated bus current, the obtained target bus current value has a better fit with the actual bus current value.

Step 106, controlling the permanent magnet synchronous motor according to the target bus current value.

In the embodiment of the present application, the bus current may monitor the controller driven by the permanent magnet synchronous motor, to realize the control of the permanent magnet synchronous motor. The higher the accuracy of the estimated bus current, the better the control performance.

In conclusion, in the control method provided by the embodiments of the present application, by collecting the rotor position, motor speed, quadrature-axis current, direct-axis current and the pulse width modulation duty cycles of the three-way bridge arms of the permanent magnet synchronous motor, compensating the rotor position according to the motor speed, and then calculating a three-phase current according to the compensated rotor position information, finally, determining a bus current estimated value by using the three-phase current and the PWM value as a calculation input of the bus current, after low-pass filtering the bus current, to obtain a target bus current value, therefore, controlling the permanent magnet synchronous motor according to the target bus current value. The above method can compensate the three-phase current at any position, in all working conditions, no matter whether the motor speed is high or low, there is a high estimation accuracy, which allows engineers to grasp the bus current at any time, and then realize the precise control of the permanent magnet synchronous motor.

FIG. 2 illustrates a second flow chart of a control method according to an embodiment of the present application, and the method may include:

step 201, collecting a rotor position, a motor speed, a quadrature-axis current, a direct-axis current and pulse width modulation duty cycles of three-way bridge arms of the permanent magnet synchronous motor.

In the embodiment of the present application, the quadrature-axis current and the direct-axis current may be directly read by a measuring tool during the working process of the motor, and the rotor position information may be obtained through a resolver coaxial with the rotor; the motor speed information may be obtained by the Hall switch detection method; and the pulse width modulation duty cycles of the three-way bridge arms may be obtained by calculating the ratio of the high-level action time collected by the detector to the current period.

Step 202, querying a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value.

In the embodiment of the present application, there is a certain delay of the time from the position sensor detects the rotor position information to the acquisition and reading, in other words, the read rotor position information is not the real position of the rotor at this moment. And because the motor speed is converted by counting the pulse voltage, there is no delay, so according to the corresponding relation between the motor speed and the rotor position, the rotor position may be compensated to obtain the real-time rotor position information. Specifically, the rotor-rotation-angle compensation value corresponding to the motor speed may be queried from the preset rotor-position-information compensation table according to the obtained motor speed value.

Further, the preset rotor-position-information compensation table is obtained by the following step A1 - step A3:

step A1, selecting a plurality of test motor speeds in the speed range of the permanent magnet synchronous motor.

Specifically, a plurality of rotational speed points {W1, W2, W3...Wn} may be uniformly selected in the entire speed range of the permanent magnet synchronous motor as the test motor speeds.

Step A2, for each of the plurality of test motor speeds, determining a bus current actual value and a bus current test value corresponding to the test motor speed.

In a specific implementation, the actual bus current may be collected by a hardware current sensor, and the bus current estimated value may be obtained according to a preset bus current estimation formula. Specifically, the bus current estimation formula may be obtained by the following deduction calculation:

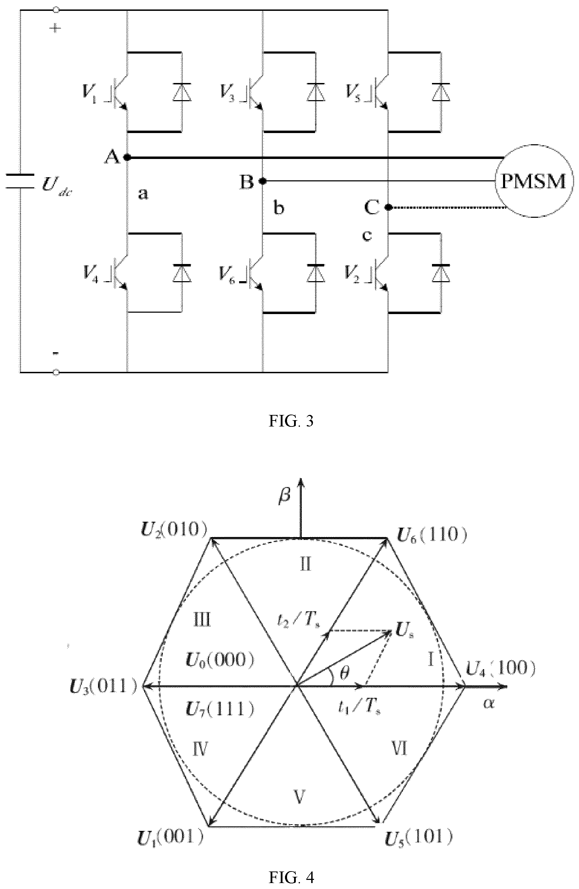

FIG. 3 illustrates a schematic diagram of a three-phase full-bridge inverter circuit according to an embodiment of the present application.

As shown in FIG. 3, the three-phase full-bridge inverter circuit corresponds to three bridge walls A, B, and C. The circuit has 6 switches in total, corresponding to 8 switch states in total, PMSM is the permanent magnet synchronous motor, and $U_{dc}$ is the bus voltage applied to the permanent magnet synchronous motor.

FIG. 4 illustrates a schematic diagram of a voltage space vector relationship according to an embodiment of the present application.

As shown in FIG. 4, the 8 switch states of the circuit are: $U_1$(001), $U_2$(010), $U_3$ (011), $U_4$(100), $U_5$(101), $U_6$(110), $U_7$(111), $U_0$(000), respectively, corresponding to 6 kinds of vector spaces, that is, 6 sectors. Among them, $U_7$(111) and $U_0$ (000) are zero vectors, and the rest are non-zero vectors. In FIG. 4, any voltage vector $U_s$ is obtained by synthesizing two adjacent voltage vectors and a zero vector. For the six non-zero switch states, the corresponding relation of the phase current of each switch state and the bus current $I_{dc}$ are shown in Table 1 below:

Table 1

|  | A-phase | B-phase | C-phase |
|---|---|---|---|
| $U_4$(100) | $I_{dc}$ | $-0.5*I_{dc}$ | $-0.5*I_{dc}$ |
| $U_6$(110) | $0.5*Ide$ | $0.5*I_{dc}$ | $-I_{dc}$ |
| $U_2$(010) | $-0.5*I_{dc}$ | $I_{dc}$ | $-0.5*I_{dc}$ |
| $U_3$(011) | $-I_{dc}$ | $0.5*I_{dc}$ | $0.5*I_{dc}$ |
| $U_1$(001) | $-0.5*I_{dc}$ | $-0.5*I_{dc}$ | $I_{dc}$ |
| $U_5$(101) | $0.5*I_{dc}$ | $-I_{dc}$ | $0.5*I_{dc}$ |

For example, for the switch state $U_4$(100), the bus current $I_{dc}$ flows into the motor through an insulated gate bipolar transistor (IGBT) V1, and then flows back to the power supply through IGBT V6 and IGBT V2, so in this state, the A-phase current is: $I_{dc}$, the B-phase current is: $-0.5*I_{dc}$, and the C-phase current is: $-0.5*I_{dc}$.

Table 2 shows the action schedule of adjacent voltage vectors corresponding to the six sectors. As follows:

Table 2

| sector | voltage vector | action time | current relation |
|---|---|---|---|
| Sector I | $U_4(100)$ | $T_4=T_a-T_b$ | $I_{dc}=I_a$ |
| | $U_6(110)$ | $T_6=T_b-T_c$ | $I_{dc}=-I_c$ |
| Sector II | $U_6(110)$ | $T_6=T_a-T_c$ | $I_{dc}=-I_c$ |
| | $U_2(010)$ | $T_2=T_b-T_a$ | $I_{dc}=I_b$ |
| Sector III | $U_2(010)$ | $T_2=T_b-T_c$ | $I_{dc2}=I_b$ |
| | $U_3(011)$ | $T_3=T_c-T_a$ | $I_{dc3}=-I_a$ |
| Sector IV | $U_3(011)$ | $T_3=T_b-T_a$ | $I_{dc3}=-I_a$ |
| | $U_1(001)$ | $T_1=T_c-T_b$ | $I_{dc1}=I_c$ |
| Sector V | $U_1(001)$ | $T_1=T_c-T_a$ | $I_{dc1}=I_c$ |
| | $U_5(101)$ | $T_5=T_a-T_b$ | $I_{dc5}=-I_b$ |
| Sector VI | $U_5(101)$ | $T_5=T_c-T_b$ | $I_{dc5}=-I_b$ |
| | $U_4(100)$ | $T_4=T_a-T_c$ | $I_{dc4}=I_a$ |

In Table 2, $I_a$, $I_b$, and $I_c$ represent the current of the three-way bridge arms, respectively. $T_a$, $T_b$, and $T_c$ are the action time of $I_a$, $I_b$, and $I_c$ in the bus, respectively. Taking the first sector I as an example, when the synthetic voltage vector is located in this sector, the action time of $U_4(100)$ is: $T_4=T_a-T_b$, the bus current $I_{dc}=I_a$ in this state, and the action time of $U_6$ (110) is: $T_6=T_b-T_c$, the bus current $I_{dc}=-I_c$ in this state, then the bus current $I_{dc}$ in this sector is:

$$I_{dc} = (T_a-T_b)*I_a + (T_b-T_c)*(-I_c) \qquad (1)$$

Due to $I_a + I_b + I_c = 0$, simplify formula (1) to get:

$$I_{dc} = T_a*I_a + T_b*I_b + T_c*I_c \qquad (2)$$

Similarly, it can be concluded that in other sectors, the relation between the bus current and the three-phase current is:

$$I_{dc} = d_A * I_A + d_B * I_B + d_C * I_C \qquad (3)$$

Therefore, it can be concluded that the formula (3) is the estimation formula of the bus current. Among them, $d_A$, $d_B$, and $d_C$ are the PWM duty cycle of each bridge arm, respectively, $I_A$, $I_B$, and $I_C$ are the three-phase current value of each bridge arm, respectively. If $d_A$, $d_B$, $d_C$ or $I_A$, $I_B$, $I_C$ are the compensated values, the real-time bus current value may be obtained. However, in this step A2, since $d_A$, $d_B$, $d_C$ or $I_A$, $I_B$, $I_C$ are not compensated, the bus current value obtained according to formula (3) is not real-time.

Step A3, determining the preset rotor-position-information compensation table according to the bus current actual values and the bus current test values.

In the embodiment of the present application, the rotor position compensation value is adjusted according to the bus current value estimated in step A3 and the actual bus current value collected by the hardware current sensor in step A2; and the position compensation parameters are debugged in the entire speed range of the motor, to obtain a table of position compensation values corresponding to different rotational speeds, that is, the preset rotor-position-information compensation table.

Further, the step A3 includes:

step A31, calculating a difference value between the bus current actual value and the bus current test value corresponding to each of the plurality of test motor speeds.

In the embodiment of the present application, with each test motor speed being $\{W_1, W_2, W_3...W_n\}$, the bus current test values $\{M_1, M_2, M_3... M_n\}$ are calculated according to formula (3), the bus current actual values $\{N_1, N_2, N_3...N_n\}$ are collected via the hardware current sensor, and the difference value between the corresponding $M_n$ and $N_n$ is calculated with each test motor speed being $W_n$.

Step A32, determining a compensation value of a test rotor position corresponding to each of the plurality of test motor speeds according to the difference value.

In the embodiment of the present application, with different test motor speeds, different torque commands are given, the rotor-rotation-angle compensation value is adjusted according to the difference value between the bus current actual value and the bus current test value. The rotation angle compensation value within the speed range of the motor is debugged, to obtain the compensation value of the test rotor position corresponding to different test motor speeds.

Step A33, generating the rotor-position-information compensation table according to the compensation values and the test motor speeds.

In the embodiment of the present application, within the entire speed range of the permanent magnet synchronous motor, the position compensation parameters are adjusted to obtain a table of position compensation values corresponding to different rotational speeds, that is, the preset rotor-position-information compensation table.

Step 203, according to the rotor-rotation-angle compensation value, compensating the rotor position, to obtain the real-time rotor position.

In the embodiment of the present application, the rotor position is the rotor rotation angle, compensating the rotor position is to compensate the rotor rotation angle. The corresponding compensation value is queried according to the rotor-position-information compensation table, if the rotor rotation angle is $\theta_1$, the compensation value is added to $\theta_1$ to obtain the real-time rotor position $\theta_2$.

Step 204, transforming the quadrature-axis current and the direct-axis current into a two-phase current that is stationary relative to a stator according to the real-time rotor position.

In the embodiment of the present application, the transformation from the two-phase that is stationary relative to the rotor to the two-phase that is stationary relative to the stator may use an inverse Park transformation method. The inverse Park transformation is to transform the current $I_d$ and $I_q$ in the rotating coordinate system into the current $I_\alpha$ and $I_\beta$ in the static coordinate system. The inverse Park transformation formula is:

$$\begin{bmatrix} I_\alpha \\ I_\beta \end{bmatrix} = \begin{bmatrix} \cos\theta_2 & -\sin\theta_2 \\ \sin\theta_2 & \cos\theta_2 \end{bmatrix}\begin{bmatrix} I_d \\ I_q \end{bmatrix} \qquad (4)$$

Wherein, $I_d$ and $I_q$ in formula (4) are the quadrature-axis current and the direct-axis current collected in step 201, $I_\alpha$ and $I_\beta$ are the two-phase current that is stationary relative to the stator obtained by transforming in this step. Since the real-time rotor position $\theta_2$ is a compensated angle value, $I_\alpha$ and $I_\beta$ obtained by transforming are the compensated two-phase current.

Step 205, transforming the two-phase current that is stationary relative to the stator into the real-time three-phase current.

In the embodiment of the present application, the transformation from the two-phase that is stationary relative to the stator to the real-time three-phase current may use an inverse Clark transformation. The inverse Clark transformation is to transform the current $I_\alpha$ and $I_\beta$ in the two-phase coordinate system into the current $I_A$, $I_B$, and $I_C$ in the three-phase coordinate system. The inverse Clark transformation formula is:

$$\begin{bmatrix} I_A' \\ I_B' \\ I_C' \end{bmatrix} = \frac{2}{3}\begin{bmatrix} 1 & 0 \\ -1/2 & \sqrt{3}/2 \\ -1/2 & -\sqrt{3}/2 \end{bmatrix}\begin{bmatrix} I_\alpha \\ I_\beta \end{bmatrix} \qquad (5)$$

Wherein, $I_A'$, $I_B'$, and $I_C'$ are the three-phase current obtained by transforming, since $I_\alpha$ and $I_\beta$ are the compensated two-phase current, the three-phase current $I_A'$, $I_B'$, and $I_C'$ obtained in this step are the compensated three-phase current, that is the real-time three-phase current.

Step 206, for each bridge arm, calculating a product of a current corresponding to the bridge arm from the real-time three-phase current and the pulse width modulation duty cycle corresponding to the bridge arm.

In the embodiment of the present application, the three-phase current value calculated in step 205 is divided to obtain the current $I_A'$, $I_B'$, and $I_C'$ corresponding to each bridge arm of the three-way bridge arms, and the current $I_A'$, $I_B'$, and $I_C'$ corresponding to each bridge arm are multiplied to the pulse width modulation duty cycles $d_A$, $d_B$, and $d_C$ collected in step 201 of the corresponding bridge arm, to obtain $d_A * I_A'$, $d_B * I_B'$, and $d_C * I_C'$.

Step 207, calculating a sum of the products corresponding to the three-way bridge arms, to obtain the bus current estimated value.

In the embodiment of the present application, the three products in step 206 are added to obtain the bus current estimated value, that is:

$$I = d_A * I_A' + d_B * I_B' + d_C * I_C' \tag{6}$$

Step 208, low-pass filtering the bus current estimated value, to obtain a target bus current value.

In the embodiment of the present application, the low-pass filter is a signal filtering method, and the rule is that low-frequency signals can pass normally, while high-frequency signals exceeding a set threshold are blocked and weakened. However, the magnitude of the blocking and the weakening will vary according to different frequencies and different filtering purposes. Since the estimated bus current value has many high-frequency points, from the waveform, there are many burrs, while the normal bus current is relatively stable and smooth, so after low-pass filtering the estimated bus current, the obtained target bus current value has a better fit with the actual bus current value.

Step 209, controlling the permanent magnet synchronous motor according to the target bus current value.

In the embodiment of the present application, the bus current may monitor the controller driven by the permanent magnet synchronous motor, to realize the control of the permanent magnet synchronous motor. The higher the accuracy of the estimated bus current, the better the control performance.

In conclusion, in the control method provided by the embodiments of the present application, by collecting the rotor position, motor speed, quadrature-axis current, direct-axis current and the pulse width modulation duty cycles of the three-way bridge arms of the permanent magnet synchronous motor, compensating the rotor position according to the motor speed, and then calculating a three-phase current according to the compensated rotor position information, finally, determining a bus current estimated value by using the three-phase current and the PWM value as a calculation input of the bus current, after low-pass filtering the bus current, to obtain a target bus current value, therefore, controlling the permanent magnet synchronous motor according to the target bus current value. The above method can compensate the three-phase current at any position, in all working conditions, no matter whether the motor speed is high or low, there is a high estimation accuracy, which allows engineers to grasp the bus current at any time, and then realize the precise control of the permanent magnet synchronous motor.

In addition, the embodiment of the present application selects a plurality of test motor speeds within the speed range of the motor, calculates the bus current actual value and bus current estimated value corresponding to each test motor speed, and determines the preset rotor position compensation table according to the difference value between the bus current actual value and bus current estimated value, and the rotor position may be compensated through the preset rotor position compensation table to obtain the real-time rotor position, then the quadrature-axis current and the direct-axis current are transformed into the three-phase current according to the real-time rotor position, therefore, the compensation for the three-phase current is realized, and then the bus current value with higher accuracy may be estimated according to the compensated three-phase current. The above method is simple and easy to implement, and only needs to calibrate the angle of compensation according to the rotation speed, which is convenient for calibration and saves time.

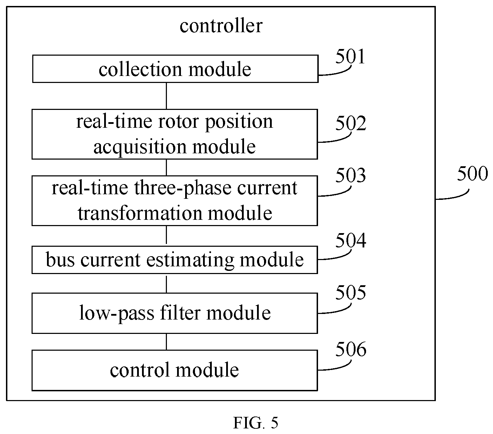

FIG. 5 illustrates a first structural block diagram of a controller according to an embodiment of the present application. The controller includes:

a collection module 501, configured to collect a rotor position, a motor speed, a quadrature-axis current, a direct-axis current and pulse width modulation duty cycles of three-way bridge arms of the permanent magnet synchronous motor;

a real-time rotor position acquisition module 502, configured to compensate the rotor position by using the motor speed, to obtain a real-time rotor position;

a real-time three-phase current transformation module 503, configured to transform the quadrature-axis current and the direct-axis current into a real-time three-phase current according to the real-time rotor position;

a bus current estimating module 504 configured to, according to the real-time three-phase current and the pulse width modulation duty cycles of the three-way bridge arms, determine a bus current estimated value;

a low-pass filter module 505, configured to low-pass filter the bus current estimated value, to obtain a target bus current value; and

a control module 506, configured to control the permanent magnet synchronous motor according to the target bus current value.

In the controller provided by the embodiments of the present application, by collecting the rotor position, motor speed, quadrature-axis current, direct-axis current and the pulse width modulation duty cycles of the three-way bridge arms of the permanent magnet synchronous motor, compensating the rotor position according to the motor speed, and then calculating a three-phase current according to the compensated rotor position information, finally, determining a bus current estimated value by using the three-phase current and the PWM value as a calculation input of the bus current, after low-pass filtering the bus current, to obtain a target bus current value, therefore, controlling the permanent magnet synchronous motor according to the target bus current value. The above method can compensate the three-phase current at any position, in all working conditions, no matter whether the motor speed is high or low, there is a high estimation accuracy, which allows engineers to grasp the bus current at any time, and then realize the precise control of the permanent magnet synchronous motor.

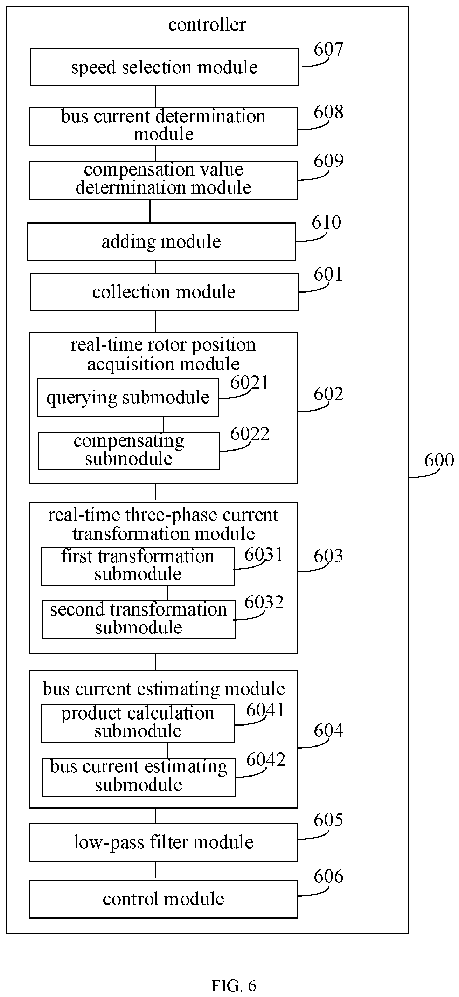

Based on FIG. 5, FIG. 6 illustrates a second structural block diagram of a controller according to an embodiment of the present application. The controller 600 includes:

a collection module 601, configured to collect a rotor position, a motor speed, a quadrature-axis current, a direct-axis current and pulse width modulation duty cycles of three-way bridge arms of the permanent magnet synchronous motor;

a real-time rotor position acquisition module 602, configured to compensate the rotor position by using the motor speed, to obtain a real-time rotor position;

a real-time three-phase current transformation module 603, configured to transform the quadrature-axis current and the direct-axis current into a real-time three-phase current according to the real-time rotor position;

a bus current estimating module 604 configured to, according to the real-time three-phase current and the pulse width modulation duty cycles of the three-way bridge arms, determine a bus current estimated value;

a low-pass filter module 605, configured to low-pass filter the bus current estimated value, to obtain a target bus current value; and

a control module 606, configured to control the permanent magnet synchronous motor according to the target bus current value.

Further, the rotor position is a rotor rotation angle, and the real-time rotor position acquisition module 602 includes:

a querying submodule 6021, configured to query a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value; and

a compensating submodule 6022 configured to, according to the rotor-rotation-angle compensation value, compensate the rotor position, to obtain the real-time rotor position.

Further, the controller 600 further includes:

a speed selection module 607, configured to select a plurality of test motor speeds in the speed range of the permanent magnet synchronous motor;

a bus current determination module 608 configured to, for each of the plurality of test motor speeds, determining a bus current actual value and a bus current test value corresponding to the test motor speed;

a compensation value determination module 609, configured to determine a corresponding rotor-rotation-angle compensation value according to the bus current actual value and the bus current test value corresponding to the test motor speed; and

an adding module 610, configured to add the rotor-rotation-angle compensation value and the test motor speed into the rotor-position-information compensation table according to the corresponding relation.

Further, the compensation value determination module 609 includes:

a difference value calculation submodule, configured to calculate a difference value between the bus current actual value and the bus current test value corresponding to each of the plurality of test motor speeds; and

a compensation value determination submodule, configured to determine the rotor-rotation-angle compensation value corresponding to each of the plurality of test motor speeds according to the difference value.

Further, the real-time three-phase current transformation module 603 includes:

a first transformation submodule 6031, configured to transform the quadrature-axis current and the direct-axis current into a two-phase current that is stationary relative to a stator according to the real-time rotor position; and
a second transformation submodule 6032, configured to transform the two-phase current that is stationary relative to the stator into the real-time three-phase current.

Further, the bus current estimating module 604 includes:

a product calculation submodule 6041 configured to, for each bridge arm, calculate a product of a current corresponding to the bridge arm from the real-time three-phase current and the pulse width modulation duty cycle corresponding to the bridge arm; and
a bus current estimating submodule 6042, configured to calculate a sum of the products corresponding to the three-way bridge arms, to obtain the bus current estimated value.

In conclusion, in the controller provided by the embodiments of the present application, by collecting the rotor position, motor speed, quadrature-axis current, direct-axis current and the pulse width modulation duty cycles of the three-way bridge arms of the permanent magnet synchronous motor, compensating the rotor position according to the motor speed, and then calculating a three-phase current according to the compensated rotor position information, finally, determining a bus current estimated value by using the three-phase current and the PWM value as a calculation input of the bus current, after low-pass filtering the bus current, to obtain a target bus current value, therefore, controlling the permanent magnet synchronous motor according to the target bus current value. The above method can compensate the three-phase current at any position, in all working conditions, no matter whether the motor speed is high or low, there is a high estimation accuracy, which allows engineers to grasp the bus current at any time, and then realize the precise control of the permanent magnet synchronous motor.

In addition, the controller of the embodiment of the present application selects a plurality of test motor speeds within the speed range of the motor, calculates the bus current actual value and bus current estimated value corresponding to each test motor speed, and determines the preset rotor position compensation table according to the difference value between the bus current actual value and bus current estimated value, and the rotor position may be compensated through the preset rotor position compensation table to obtain the real-time rotor position, then the quadrature-axis current and the direct-axis current are transformed into the three-phase current according to the real-time rotor position, therefore, the compensation for the three-phase current is realized, and then the bus current value with higher accuracy may be estimated according to the compensated three-phase current. The above method is simple and easy to implement, and only needs to calibrate the angle of compensation according to the rotation speed, which is convenient for calibration and saves time.

The described apparatus embodiment is merely an example, the units described as separate components may or may not be physically separated, and the components displayed as units may or may not be physical units, that is, may be located in one place, or may be distributed to a plurality of network units. Some or all of the modules may be selected according to actual needs to achieve the objectives of the solutions of the embodiment. It can be understood and implemented by those of ordinary skill in the art without creative efforts.

Component embodiments in the present application may be implemented in hardware, or a software module running on one or more processors, or any combination thereof. It should be understood by those skilled in the art that a microprocessor or digital signal processor (DSP) may be used in practice to achieve some or all of functions of some or all of components in the computing and processing device according to an embodiment of the present application. The present application may also be implemented as a device or apparatus program (e.g., a computer program and a computer program product) for performing some or all of the methods described herein. Such a program for implementing the present application may be stored in a computer-readable medium, or may take the form of one or more signals. Such a signal can be downloaded from an Internet site, or provided on a carrier signal, or in any other form.

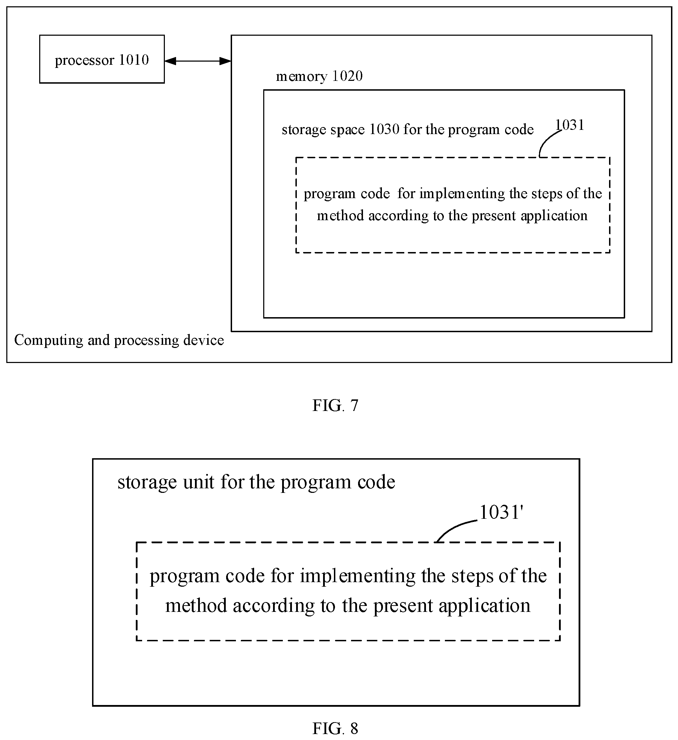

For example, FIG. 7 shows a computing and processing device capable of implementing the method according to the present application. The computing and processing device conventionally includes a processor 1010 and a computer program product or computer-readable medium in the form of a memory 1020. The memory 1020 may be an electronic memory such as flash memory, EEPROM (electrically erasable programmable read-only memory), EPROM, hard disk or ROM. The memory 1020 has a storage space 1030 for program codes 1031 for executing any one of the method steps in the above method. For example, the storage space 1030 for program codes may include the program codes 1031 for implementing various steps in the above method respectively. These program codes may be read from or written into one or more computer program products. These computer program products include program code carriers such as hard disk, compact disk (CD), memory card or floppy disk. Such a computer program product is typically a portable or fixed storage unit as described with reference to FIG. 8. The storage unit may have a storage segment or storage space arranged in a

## EP 4 007 158 B1

manner similar to the memory 1020 of the computing and processing device shown in FIG. 7. The program codes may, for example, be compressed in an appropriate form. The storage unit typically includes computer-readable codes 1031', i.e., codes that can be read by a processor such as 1010, these codes, when run by the computing and processing device, cause the computing and processing device to perform various steps in the method described above.

As used herein, reference to "one embodiment", "an embodiment" or "one or more embodiments" means that a particular feature, structure, or characteristic described in connection with the embodiment is included in at least one embodiment of the present application. Further, it should be noted that instances of the phrase "in one embodiment" herein do not necessarily refer to the same embodiment.

In the claims, any reference signs placed between parentheses shall not be construed as limiting to the claim. The word "comprising" does not exclude the presence of elements or steps other than those listed in a claim. The word "a" or "an" preceding an element does not exclude the presence of a plurality of such elements. The present application can be implemented by means of hardware including several different elements and by means of a suitably programmed computer. In a unit claim enumerating several means, several of these means may be embodied by the same item of hardware. The use of the words "first", "second" and "third" does not indicate any sequence. These words can be interpreted as names.

Finally, it should be noted that the foregoing embodiments are merely intended for describing the technical solutions of the present application rather than limiting the present application. Although the present application is described in detail with reference to the foregoing embodiments, those of ordinary skill in the art should understand that they may still make modifications to the technical solutions described in the foregoing embodiments, without departing from the scope of protection as defined by the appended claims.

### Claims

1. A control method, wherein the method is applied in a controller of a permanent magnet synchronous motor, and the method comprises:

   collecting (101, 201) a rotor position, a motor speed, a quadrature-axis current, a direct-axis current and pulse width modulation duty cycles of three-way bridge arms of the permanent magnet synchronous motor, wherein the quadrature-axis current and the direct-axis current are measured by a measuring tool;
   compensating (102) the rotor position by using the motor speed, to obtain a real-time rotor position;
   transforming (103) the quadrature-axis current and the direct-axis current into a real-time three-phase current according to the real-time rotor position;
   according to the real-time three-phase current and the pulse width modulation duty cycles of the three-way bridge arms, determining (104) an estimated value of a bus current;
   low-pass filtering (105) the estimated value of the bus current, to obtain a target value of the bus current; and
   controlling (106) the permanent magnet synchronous motor according to the target value of the bus current, wherein the rotor position is a rotor rotation angle, and compensating the rotor position by using the motor speed, to obtain a real-time rotor position, comprises:

      querying (202) a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value; and
      according to the rotor-rotation-angle compensation value, compensating (203) the rotor position, to obtain the real-time rotor position,
      wherein the preset rotor-position-information compensation table is obtained by the following steps:

         selecting a plurality of test motor speeds in the speed range of the permanent magnet synchronous motor;
         for each of the plurality of test motor speeds, determining an actual value of the bus current and calculating a test value of the bus current corresponding to the test motor speed;
         determining a corresponding rotor-rotation-angle compensation value according to the actual value of the bus current and the test value of the bus current corresponding to the test motor speed; and
         adding the rotor-rotation-angle compensation value and the test motor speed into the rotor-position-information compensation table according to the corresponding relation.

2. The method according to claim 1, wherein determining a corresponding rotor-rotation-angle compensation value according to the actual value of the bus current and the test value of the bus current corresponding to the test motor speed comprises:

calculating a difference value between the actual value of the bus current and the test value of the bus current corresponding to each of the plurality of test motor speeds; and
determining the rotor-rotation-angle compensation value corresponding to each of the plurality of test motor speeds according to the difference value.

3. The method according to claim 1, wherein transforming the quadrature-axis current and the direct-axis current into a real-time three-phase current according to the real-time rotor position comprises:

transforming (204) the quadrature-axis current and the direct-axis current into a two-phase current that is stationary relative to a stator according to the real-time rotor position; and
transforming (205) the two-phase current that is stationary relative to the stator into the real-time three-phase current.

4. The method according to claim 1, wherein according to the real-time three-phase current and the pulse width modulation duty cycles of the three-way bridge arms, determining an estimated value of the bus current, comprises:

for each bridge arm, calculating (206) a product of a current corresponding to the bridge arm from the real-time three-phase current and the pulse width modulation duty cycle corresponding to the bridge arm; and
calculating (207) a sum of the products corresponding to the three-way bridge arms, to obtain the estimated value of the bus current.

5. A controller (500, 600), wherein the controller (500, 600) comprises:

a collection module (501, 601), configured to collect a rotor position, a motor speed, a quadrature-axis current, a direct-axis current and pulse width modulation duty cycles of three-way bridge arms of a permanent magnet synchronous motor, wherein the quadrature-axis current and the direct-axis current are measured by a measuring tool;
a real-time rotor position acquisition module (502), configured to compensate the rotor position by using the motor speed, to obtain a real-time rotor position;
a real-time three-phase current transformation module (503), configured to transform the quadrature-axis current and the direct-axis current into a real-time three-phase current according to the real-time rotor position;
a estimating module of a bus current (504) configured to, according to the real-time three-phase current and the pulse width modulation duty cycles of the three-way bridge arms, determine an estimated value of the bus current;
a low-pass filter module (505), configured to low-pass filter the estimated value of the bus current, to obtain a target value of the bus current; and
a control module (506), configured to control the permanent magnet synchronous motor according to the target value of the bus current,
wherein the rotor position is a rotor rotation angle, and the real-time rotor position acquisition module comprises:

a querying submodule (6021), configured to query a rotor-rotation-angle compensation value corresponding to the motor speed from a preset rotor-position-information compensation table by using the motor speed; wherein the preset rotor-position-information compensation table records a corresponding relation between the motor speed and the rotor-rotation-angle compensation value; and
a compensating submodule (6022) configured to, according to the rotor-rotation-angle compensation value, compensate the rotor position, to obtain the real-time rotor position,
wherein the controller further comprises:

a speed selection module (607), configured to select a plurality of test motor speeds in the speed range of the permanent magnet synchronous motor;
a determination module of the bus current (608) configured to, for each of the plurality of test motor speeds, determining an actual value of the bus current and calculating a test value of the bus current corresponding to the test motor speed;
a compensation value determination module (609), configured to determine a corresponding rotor-rotation-angle compensation value according to the actual value of the bus current and the test value of the bus current corresponding to the test motor speed; and

an adding module (610), configured to add the rotor-rotation-angle compensation value and the test motor speed into the rotor-position-information compensation table according to the corresponding relation.

6. The controller (600) according to claim 5, wherein the compensation value determination module comprises:

a difference value calculation submodule, configured to calculate a difference value between the actual value of the bus current and the test value of the bus current corresponding to each of the plurality of test motor speeds; and

a compensation value determination submodule, configured to determine the rotor-rotation-angle compensation value corresponding to each of the plurality of test motor speeds according to the difference value.

7. The controller (600) according to claim 5, wherein the real-time three-phase current transformation module comprises:

a first transformation submodule (6031), configured to transform the quadrature-axis current and the direct-axis current into a two-phase current that is stationary relative to a stator according to the real-time rotor position; and

a second transformation submodule (6032), configured to transform the two-phase current that is stationary relative to the stator into the real-time three-phase current.

8. The controller (600) according to claim 5, wherein the estimating module of the bus current comprises:

a product calculation submodule (6041) configured to, for each bridge arm, calculate a product of a current corresponding to the bridge arm from the real-time three-phase current and the pulse width modulation duty cycle corresponding to the bridge arm; and

an estimating submodule of the bus current (6042), configured to calculate a sum of the products corresponding to the three-way bridge arms, to obtain the estimated value of the bus current.

## Patentansprüche

1. Steuerverfahren, wobei das Verfahren in einer Steuervorrichtung eines permanenterregten Synchronmotors angewendet wird, und wobei das Verfahren aufweist:

Erfassen (101, 201) einer Rotorposition, einer Motordrehzahl, eines Quadraturachsenstroms, eines Direktachsenstroms und von Pulsweitenmodulation-Tastverhältnissen der Dreiweg-Brückenarme des permanenterregten Synchronmotors, wobei der Quadraturachsenstrom und der Direktachsenstrom mittels eines Messmittels gemessen werden;

Kompensieren (102) der Rotorposition unter Verwendung der Motordrehzahl, um eine Echtzeit-Rotorposition zu erhalten;

Transformieren (103) des Quadraturachsenstroms und des Direktachsenstroms gemäß der Echtzeit-Rotorposition in einen Echtzeit-Dreiphasenstrom;

Bestimmen (104) eines Schätzwerts des Busstroms gemäß dem Echtzeit-Dreiphasenstrom und den Pulsweitenmodulation-Tastverhältnissen der Dreiweg-Brückenarme;

Tiefpassfiltern (105) des Schätzwerts des Busstroms, um einen Zielwert des Busstroms zu erhalten; und

Steuern (106) des permanenterregten Synchronmotors gemäß dem Zielwert des Busstroms, wobei die Rotorposition ein Rotor-Drehwinkel ist, und das Kompensieren der Rotorposition unter Verwendung der Motordrehzahl, um eine Echtzeit-Rotorposition zu erhalten, aufweist:

Abfragen (202) eines Rotor-Drehwinkel-Kompensationswerts, welcher der Motordrehzahl entspricht, aus einer voreingestellten Kompensationsinformationstabelle unter Verwendung der Motordrehzahl; wobei die voreingestellte Kompensationsinformationstabelle eine Zuordnungsbeziehung zwischen der Motordrehzahl und dem Rotor-Drehwinkel-Kompensationswert enthält; und

Kompensieren (203) der Rotorposition gemäß dem Rotor-Drehwinkel-Kompensationswert, um die Echtzeit-Rotorposition zu erhalten, wobei die voreingestellte Kompensationsinformationstabelle durch die folgenden Schritte erhalten wird:

Auswählen mehrerer Test-Motordrehzahlen im Drehzahlbereich des permanenterregten Synchronmotors;

Bestimmen eines Istwerts des Busstroms und Berechnen eines Testwerts des Busstroms, der der Test-Motordrehzahl entspricht, für jede der mehreren Test-Motordrehzahlen;

Bestimmen eines entsprechenden Rotor-Drehwinkel-Kompensationswerts gemäß dem Istwert des Busstroms und dem Testwert des Busstroms, welcher der Test-Motordrehzahl entspricht; und

Hinzufügen des Rotor-Drehwinkel-Kompensationswerts und der Test-Motordrehzahl in die Kompensationsinformationstabelle gemäß der Zuordnungsbeziehung.

2. Verfahren nach Anspruch 1, wobei das Bestimmen eines entsprechenden Rotor-Drehwinkel-Kompensationswerts gemäß dem Istwert des Busstroms und dem Testwert des Busstroms, der der Test-Motordrehzahl entspricht, aufweist:

Berechnen eines Differenzwerts zwischen dem Istwert des Busstroms und dem Testwert des Busstroms, der jeweils jeder der mehreren Test-Motordrehzahlen entspricht; und

Bestimmen des Rotor-Drehwinkel-Kompensationswerts, der jeweils jeder der mehreren Test-Motordrehzahlen entspricht, gemäß dem Differenzwert.

3. Verfahren nach Anspruch 1, wobei das Transformieren des Quadraturachsenstroms und des Direktachsenstroms gemäß der Echtzeit-Rotorposition in einen Echtzeit-Dreiphasenstrom aufweist:

Transformieren (204) des Quadraturachsenstroms und des Direktachsenstroms gemäß der Echtzeit-Rotorposition in einen statorfesten zweiphasigen Strom; und

Transformieren (205) des statorfesten zweiphasigen Stroms in den Echtzeit-Dreiphasenstrom.

4. Verfahren nach Anspruch 1, wobei das Bestimmen eines Schätzwerts des Busstroms gemäß dem Echtzeit-Dreiphasenstrom und den Pulsweitenmodulation-Tastverhältnissen der Dreiweg-Brückenarme aufweist:

Berechnen (206) eines Produkts aus einem dem Brückenarm aus dem Echtzeit-Dreiphasenstrom zugeordneten Strom und dem dem Brückenarm zugeordneten Pulsweitenmodulation-Tastverhältnis, für jeden Brückenarm; und

Berechnen (207) einer Summe der den Dreiweg-Brückenarmen entsprechenden Produkte, um den Schätzwert des Busstroms zu erhalten.

5. Steuervorrichtung (500, 600), wobei die Steuervorrichtung (500, 600) aufweist:

ein Erfassungs-Modul (501, 601), welches eingerichtet ist zum Erfassen einer Rotorposition, einer Motordrehzahl, eines Quadraturachsenstroms, eines Direktachsenstroms und von Pulsweitenmodulation-Tastverhältnissen der Dreiweg-Brückenarme eines permanenterregten Synchronmotors, wobei der Quadraturachsenstrom und der Direktachsenstrom mittels eines Messmittels gemessen werden;

ein Echtzeit-Rotorpositions-Erfassungs-Modul (502), welches eingerichtet ist zum Kompensieren der Rotorposition unter Verwendung der Motordrehzahl, um eine Echtzeit-Rotorposition zu erhalten;

ein Echtzeit-Dreiphasenstrom-Transformations-Modul (503), welches eingerichtet ist zum Transformieren des Quadraturachsenstroms und des Direktachsenstroms gemäß der Echtzeit-Rotorposition in einen Echtzeit-Dreiphasenstrom;

ein Busstrom-Schätz-Modul (504), welches eingerichtet ist zum Bestimmen eines Schätzwerts des Busstroms gemäß dem Echtzeit-Dreiphasenstrom und den Pulsweitenmodulation-Tastverhältnissen der Dreiweg-Brückenarme;

ein Tiefpassfilter-Modul (505), welches eingerichtet ist zum Tiefpassfiltern des Schätzwerts des Busstroms, um einen Zielwert des Busstroms zu erhalten; und

ein Steuerungs-Modul (506), welches eingerichtet ist zum Steuern des permanenterregten Synchronmotors gemäß dem Zielwert des Busstroms,

wobei die Rotorposition ein Rotor-Drehwinkel ist, und wobei das Echtzeit-Rotorpositions-Erfassungs-Modul Folgendes aufweist:

ein Abfrage-Submodul (6021), welches eingerichtet ist zum Abfragen eines Rotor-Drehwinkel-Kompensationswerts, welcher der Motordrehzahl entspricht, aus einer voreingestellten Kompensationsinformationstabelle unter Verwendung der Motordrehzahl; wobei die voreingestellte Kompensationsinformationstabelle eine Zuordnungsbeziehung zwischen der Motordrehzahl und dem Rotor-Drehwinkel-Kompensationswert enthält; und

ein Kompensations-Submodul (6022), welches eingerichtet ist zum Kompensieren der Rotorposition gemäß dem Rotor-Drehwinkel-Kompensationswert, um die Echtzeit-Rotorposition zu erhalten,

wobei die Steuervorrichtung ferner aufweist:

ein Drehzahl-Auswahl-Modul (607), welches eingerichtet ist zum Auswählen mehrerer Test-Motordrehzahlen im Drehzahlbereich des permanenterregten Synchronmotors;

ein Busstrom-Bestimmungs-Modul (608), welches eingerichtet ist zum Bestimmen eines Istwerts des Busstroms für jede der mehreren Test-Motordrehzahlen und zum Berechnen eines Testwerts des Busstroms, welcher der Test-Motordrehzahl entspricht;

ein Kompensationswert-Bestimmungs-Modul (609), welches eingerichtet ist zum Bestimmen eines entsprechenden Rotor-Drehwinkel-Kompensationswerts gemäß dem Istwert des Busstroms und dem Testwert des Busstroms, welcher der Test-Motordrehzahl entspricht; und

ein Hinzufügungs-Modul (610), welches eingerichtet ist zum Hinzufügen des Rotor-Drehwinkel-Kompensationswerts und der Test-Motordrehzahl in die Kompensationsinformationstabelle gemäß der Zuordnungsbeziehung.

6. Steuervorrichtung (600) nach Anspruch 5, wobei das Kompensationswert-Bestimmungs-Modul aufweist:

ein Differenzwert-Berechnungs-Submodul, welches eingerichtet ist zum Berechnen eines Differenzwerts zwischen dem Istwert des Busstroms und dem Testwert des Busstroms, der jeweils jeder der mehreren Test-Motordrehzahlen entspricht; und

ein Kompensationswert-Bestimmungs-Submodul, welches eingerichtet ist zum Bestimmen des Rotor-Drehwinkel-Kompensationswerts, der jeweils jeder der mehreren Test-Motordrehzahlen entspricht, gemäß dem Differenzwert.

7. Steuervorrichtung (600) nach Anspruch 5, wobei das Echtzeit-Dreiphasenstrom-Transformations-Modul aufweist:

ein erstes Transformations-Submodul (6031), welches eingerichtet ist zum Transformieren des Quadraturachsenstroms und des Direktachsenstroms gemäß der Echtzeit-Rotorposition in einen statorfesten zweiphasigen Strom; und

ein zweites Transformations-Submodul (6032), welches eingerichtet ist zum Transformieren des statorfesten zweiphasigen Stroms in den Echtzeit-Dreiphasenstrom.

8. Steuervorrichtung (600) nach Anspruch 5, wobei das Busstrom-Schätz-Modul aufweist:

ein Produktberechnungs-Submodul (6041), welches eingerichtet ist zum Berechnen eines Produkts aus einem dem Brückenarm aus dem Echtzeit-Dreiphasenstrom zugeordneten Strom und dem dem Brückenarm zugeordneten Pulsweitenmodulation-Tastverhältnis, für jeden Brückenarm; und

ein Busstrom-Schätz-Submodul (6042), ausgebildet zum Berechnen einer Summe der den Dreiweg-Brückenarmen entsprechenden Produkte, um den Schätzwert des Busstroms zu erhalten.

## Revendications

1. Procédé de commande, dans lequel le procédé est appliqué dans un contrôleur d'un moteur synchrone à aimants permanents, le procédé comprenant les étapes suivantes :

collecter (101, 201) une position de rotor, une vitesse de moteur, un courant transversal, un courant longitudinal, et des cycles de service de modulation d'impulsions en durée de branches de pont à trois voies du moteur synchrone à aimants permanents, dans lequel le courant transversal et le courant longitudinal sont mesurés par un outil de mesure ;

compenser (102) la position de rotor à l'aide de la vitesse de moteur, pour obtenir une position de rotor en temps réel ;

transformer (103) le courant transversal et le courant longitudinal en un courant triphasé en temps réel conformément à la position de rotor en temps réel ;

conformément au courant triphasé en temps réel et aux cycles de service de modulation d'impulsions en durée des branches de pont à trois voies, déterminer (104) une valeur estimée d'un courant de bus ;

appliquer un filtrage passe-bas (105) à la valeur estimée du courant de bus, pour obtenir une valeur cible du courant de bus, et

commander (106) le moteur synchrone à aimants permanents conformément à la valeur cible du courant de bus, dans lequel la position de rotor est un angle de rotation de rotor, et la compensation de la position de rotor à l'aide de la vitesse de moteur, afin d'obtenir une position de rotor en temps réel, comprend les étapes suivantes :

interroger (202) une valeur de compensation d'angle de rotation de rotor correspondant à la vitesse de moteur à partir d'une table de compensation d'informations de position de rotor préréglée à l'aide de la vitesse de moteur ; dans lequel la table de compensation d'informations de position de rotor préréglée enregistre une relation correspondante entre la vitesse de moteur et la valeur de compensation d'angle de rotation de rotor, et

conformément à la valeur de compensation d'angle de rotation de rotor, compenser (203) la position de rotor, afin d'obtenir la position de rotor en temps réel ;

dans lequel la table de compensation d'informations de position de rotor préréglée est obtenue par les étapes suivantes :

sélectionner une pluralité de vitesses de moteur test dans la plage de vitesses du moteur synchrone à aimants permanents ;

pour chacune de la pluralité de vitesses de moteur test, déterminer une valeur réelle du courant de bus, et calculer une valeur test du courant de bus correspondant à la vitesse de moteur test ;

déterminer une valeur de compensation d'angle de rotation de rotor correspondante conformément à la valeur réelle du courant de bus et la valeur test du courant de bus correspondant à la vitesse de moteur test, et

additionner la valeur de compensation d'angle de rotation de rotor et la vitesse de moteur test dans la table de compensation d'informations de position de rotor préréglée conformément à la relation correspondante.

2. Procédé selon la revendication 1, dans lequel la détermination d'une valeur de compensation d'angle de rotation de rotor correspondante conformément à la valeur réelle du courant de bus et la valeur test du courant de bus correspondant à la vitesse de moteur test comprend les étapes suivantes :

calculer une valeur de différence entre la valeur réelle du courant de bus et la valeur test du courant de bus correspondant à chacune de la pluralité de vitesses de moteur test, et

déterminer la valeur de compensation d'angle de rotation de rotor correspondant à chacune de la pluralité de vitesses de moteur test conformément à la valeur de différence.

3. Procédé selon la revendication 1, dans lequel la transformation du courant transversal et du courant longitudinal en un courant triphasé en temps réel conformément à la position de rotor en temps réel comprend les étapes suivantes :

transformer (204) le courant transversal et le courant longitudinal en un courant diphasé, lequel est fixe par rapport à un stator conformément à la position de rotor en temps réel, et

transformer (205) le courant diphasé, lequel est fixe par rapport au stator en courant triphasé en temps réel.

4. Procédé selon la revendication 1, dans lequel conformément au courant triphasé en temps réel et aux cycles de service de modulation de largeur d'impulsions en durée des branches de pont à trois voies, la détermination d'une valeur estimée du courant de bus comprend les étapes suivantes :

pour chaque branche de pont, calculer (206) un produit d'un courant correspondant à la branche de pont à partir du courant triphasé en temps réel et du cycle de service de modulation d'impulsions en durée correspondant à la branche de pont, et

calculer (207) une somme des produits correspondant aux branches de pont à trois voies, pour obtenir la valeur estimée du courant de bus.

5. Contrôleur (500, 600), dans lequel le contrôleur (500, 600) comprend :

un module de collecte (501, 601), configuré pour collecter une position de rotor, une vitesse de moteur, un courant transversal, un courant longitudinal et des cycles de service de modulation d'impulsions en durée de branches de pont à trois voies d'un moteur synchrone à aimants permanents, dans lequel le courant transversal et le courant longitudinal sont mesurés par un outil de mesure ;

un module d'acquisition de position de rotor en temps réel (502), configuré pour compenser la position de rotor à l'aide de la vitesse de moteur, pour obtenir une position de rotor en temps réel ;

un module de transformation de courant triphasé en temps réel (503), configuré pour transformer le courant transversal et le courant longitudinal en un courant triphasé en temps réel conformément à la position de rotor en temps réel ;

un module d'estimation d'un courant de bus (504), configuré, conformément au courant triphasé en temps réel et aux cycles de service de modulation d'impulsions en durée des branches de pont à trois voies, pour déterminer une valeur estimée du courant de bus ;

un module de filtre passe-bas (505), configuré pour appliquer un filtrage passe-bas à la valeur estimée du courant de bus, pour obtenir une valeur cible du courant de bus, et

un module de commande (506), configuré pour commander le moteur synchrone à aimants permanents conformément à la valeur cible du courant de bus,

dans lequel la position de rotor est un angle de rotation de rotor, et le module d'acquisition de position de rotor en temps réel comprend :

un sous-module d'interrogation (6021) configuré pour interroger une valeur de compensation d'angle de rotation de rotor correspondant à la vitesse de moteur à partir d'une table de compensation d'informations de position de rotor préréglée à l'aide de la vitesse de moteur ; dans lequel la table de compensation d'informations de position de rotor préréglée enregistre une relation correspondante entre la vitesse de moteur et la valeur de compensation d'angle de rotation de rotor, et

un sous-module de compensation (6022) configuré, conformément à la valeur de compensation d'angle de rotation de rotor, pour compenser la position de rotor, afin d'obtenir la position de rotor en temps réel ;

dans lequel le contrôleur comprend en outre :

un module de sélection de vitesse (607), configuré pour sélectionner une pluralité de vitesses de moteur test dans la plage de vitesses du moteur synchrone à aimants permanents ;

un module de détermination du courant de bus (608), configuré, pour chacune de la pluralité de vitesses de moteur test, pour déterminer une valeur réelle du courant de bus, et calculer une valeur test du courant de bus correspondant à la vitesse de moteur test ;

un module de détermination de valeur de compensation (609), configuré pour déterminer une valeur de compensation d'angle de rotation de rotor correspondante conformément à la valeur réelle du courant de bus et la valeur test du courant de bus correspondant à la vitesse de moteur test, et

un module d'addition (610), configuré pour additionner la valeur de compensation d'angle de rotation de rotor et la vitesse de moteur test dans la table de compensation d'informations de position de rotor conformément à la relation correspondante.

6. Contrôleur (600) selon la revendication 5, dans lequel le module de détermination de valeur de compensation comprend:

un sous-module de calcul de valeur de différence, configuré pour calculer une valeur de différence entre la valeur réelle du courant de bus et la valeur test du courant de bus correspondant à chaque vitesse de la pluralité de vitesses de moteur test, et

un sous-module de détermination de valeur de compensation, configuré pour déterminer la valeur de compensation d'angle de rotation de rotor correspondant à chacune de la pluralité de vitesses de moteur test conformément à la valeur de différence.

7. Contrôleur (600) selon la revendication 5, dans lequel le module de transformation du courant triphasé en temps réel comprend :

un premier sous-module de transformation (6031), configuré pour transformer le courant transversal et le courant longitudinal en un courant diphasé, lequel est fixe par rapport à un stator conformément à la position de rotor en temps réel, et

un second sous-module de transformation (6032), configuré pour transformer le courant diphasé, lequel est fixe par rapport au stator en courant triphasé en temps réel.

8. Contrôleur (600) selon la revendication 5, dans lequel le module d'estimation du courant de bus comprend :

un sous-module de calcul de produit (6041), configuré pour chaque branche de pont, pour calculer un produit d'un courant correspondant à la branche de pont à partir du courant triphasé en temps réel et du cycle de service de modulation d'impulsions en durée correspondant à la branche de pont, et

un sous-module d'estimation du courant de bus (6042), configuré pour calculer une somme des produits correspondant aux branches de pont à trois voies, pour obtenir la valeur estimée du courant de bus.

collecting a rotor position, a motor speed, a quadrature-axis current, a direct-axis current and pulse width modulation duty cycles of three-way bridge arms of the permanent magnet synchronous motor ⎫ 101

compensating the rotor position by using the motor speed, to obtain a real-time rotor position ⎫ 102

transforming the quadrature-axis current and the direct-axis current into a real-time three-phase current according to the real-time rotor position ⎫ 103

according to the real-time three-phase current and the pulse width modulation duty cycles of the three-way bridge arms, determining a bus current estimated value ⎫ 104

low-pass filtering the bus current estimated value, to obtain a target bus current value ⎫ 105

controlling the permanent magnet synchronous motor according to the target bus current value ⎫ 106

FIG. 1

collecting a rotor position, a motor speed, a quadrature-axis current, a direct-axis current and pulse width modulation duty cycles of three-way bridge arms of the permanent magnet synchronous motor ⎫ 201

querying a compensation value of the rotor rotation angle corresponding to the motor speed from a preset rotor position information compensation table by using the motor speed ⎫ 202

according to the compensation value of the rotor rotation angle, compensating the rotor position, to obtain the real-time rotor position ⎫ 203

transforming the quadrature-axis current and the direct-axis current into a two-phase current that are stationary relative to a stator according to the real-time rotor position ⎫ 204

transforming the two-phase current that are stationary relative to the stator into the real-time three-phase current ⎫ 205

for each bridge arm, calculating a product of a current corresponding to the bridge arm from the real-time three-phase current and the pulse width modulation duty cycle corresponding to the bridge arm ⎫ 206

calculating a sum of the products corresponding to the three-way bridge arms, to obtain the bus current estimated value ⎫ 207

low-pass filtering the bus current estimated value, to obtain a target bus current value ⎫ 208

controlling the permanent magnet synchronous motor according to the target bus current value ⎫ 209

FIG 2

FIG. 3

FIG. 4

controller

| collection module | 501 |

| real-time rotor position acquisition module | 502 |

| real-time three-phase current transformation module | 503 |

| bus current estimating module | 504 |

| low-pass filter module | 505 |

| control module | 506 |

500

FIG. 5

controller

speed selection module — 607

bus current determination module — 608

compensation value determination module — 609

adding module — 610

collection module — 601

real-time rotor position acquisition module — 602

> querying submodule — 6021
>
> compensating submodule — 6022

real-time three-phase current transformation module — 603

> first transformation submodule — 6031
>
> second transformation submodule — 6032

bus current estimating module — 604

> product calculation submodule — 6041
>
> bus current estimating submodule — 6042

low-pass filter module — 605

control module — 606

— 600

FIG. 6

processor 1010

memory 1020

storage space 1030 for the program code    1031

program code for implementing the steps of the method according to the present application

Computing and processing device

FIG. 7

storage unit for the program code

1031'

program code for implementing the steps of the method according to the present application

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107919828 A
- CN 102593841 B